# EUROPÄISCHE PATENTSCHRIFT

(11) **EP 4 360 848 B1**
(45) Veröffentlichungstag und Bekanntmachung des Hinweises auf die Patenterteilung: **18.03.2026**
(21) Anmeldenummer: 23205841.2
(22) Anmeldetag: 25.10.2023
(51) Int. Cl.: B29C 33/42

(54) **VERFAHREN ZUM AUFPRÄGEN EINES MUSTERS AUF EINEN KÖRPER**
METHOD FOR IMPRESSING A PATTERN ON A BODY
PROCÉDÉ DE GAUFRAGE D'UN MOTIF SUR UN CORPS

(30) Priorität: 25.10.2022 DE 102022128196
(43) Veröffentlichungstag der Anmeldung: 01.05.2024
(73) Patentinhaber: Heinz Fritz GmbH, 89542 Herbrechtingen (DE)
(72) Erfinder: Fritz, Heinz, 89542 Herbrechtingen (DE); Petri, Alexander, 64283 Darmstadt (DE)
(74) Vertreter: Dr. Weitzel & Partner

(56) Entgegenhaltungen:
- CN-A- 114 867 588
- US-B1- 10 118 315

## Beschreibung

Verfahren zum Übertragen eines Musters auf einen Körper Die Erfindung betrifft ein Verfahren zum Übertragen wenigstens eines Musters auf einen Körper nach der im Oberbegriff von Anspruch 1 näher definierten Art, Polymethylmethacrylat (PMMA), auch als Acrylglas bezeichnet und unter dem Markennamen Plexiglas^{®} von der Röhm GmbH vertrieben, ist ein transparenter thermoplastisches Kunststoff und wird zur Ausbildung verschiedenster Objekte und Gegenstände verwendet. PMMA wird beispielsweise in der Automobilindustrie zur Herstellung von transparenten Abdeckelementen, Bestandteilen von Leuchten und Scheiben, im Bauwesen als Verglasung, in der Halbleiterindustrie als Fotolack, im Modell- und Prototypenbau als Mineralglas-Ersatz, im Schiffsbau als U-Boot-Druckkörper, im Haushaltswarenbereich, im Gartenbau, in der Kunst und dergleichen eingesetzt. Zur Herstellung eines Körpers aus PMMA werden entsprechende Ausgangsstoffe vermengt, in flüssiger Form angemischt und härten unter Hitze und Druck durch einen Polymerisationsvorgang aus. Ein solcher Körper lässt sich unter Einwirkung von Wärme und Druck verformen, um die Gestalt des Körpers an Kundenwünsche und den späteren Einsatzzweck anzupassen.

Der Einsatzzweck eines aus PMMA bestehenden Gegenstands kann es dabei auch erfordern, dass der Gegenstand zumindest partiell an seiner Oberfläche mit einem Muster versehen wird. Ein solches Muster kann einem technischen Zweck dienen, wie beispielsweise das Sammeln von in den Gegenstand einfallendem Licht und diffuses Streuen des Lichts im Gegenstand zur Erzeugung einer gleichmäßigen Lichtverteilung, oder kann auch rein ästhetischer Natur sein. Weitere Gründe zum Übertragen eines Musters auf einen entsprechenden Gegenstand sind beispielsweise das Anbringen von Text, Symbolen oder Hinweisen, beispielsweise ein Gefahrenwarnsymbol mit erläutertem Text auf einem Warnschild.

Zum Übertragen von Mustern auf besagten Gegenständen werden die Gegenstände in der Regel nach ihrer Herstellung chemisch, thermisch und/oder mechanisch bearbeitet. Beispielsweise kann eine Oberfläche geätzt werden, mit einem Laserstrahl graviert werden oder zerspanend bearbeitet werden. Auch können Farben und Lacke zum Aufprägen eines Musters auf einen Gegenstand aufgetragen werden. Nachteilig ist dabei jedoch, dass nach der Herstellung des entsprechenden Gegenstands ein weiterer Bearbeitungsschritt erfolgen muss.

Aus der WO 2011/000636 A1 ist eine Lichtleiterplatte mit eingebetteten Störstellen und ein entsprechendes Verfahren zur dessen Herstellung bekannt. Die Lichtleiterplatte kann PMMA umfassen oder gänzlich daraus bestehen. Eine Oberfläche der Lichtleiterplatte wird dabei zumindest partiell mit optischen Störstellen versehen, welche zum gezielten Streuen von Licht dienen. Hierzu wird eine mit einer Bedruckung versehene Folie während der Extrusion beziehungsweise während dem Guss der Lichtleiterplatte mit dieser verbunden, wobei sich die Bedruckung dabei zwischen der Lichtleiterplatte und der Folie befindet. Die mit der Bedruckung versehene Folie verbleibt dabei auf der Lichtleiterplatte. Bei der bedruckten Folie handelt es sich gemäß der Druckschrift ebenfalls um eine Folie aus PMMA.

Aus der DE 10 2019 213 905 A1 ist ein Verfahren zur Herstellung eines Verbundbauteils bekannt. Das Verbundbauteil wird vor dem Aushärten eines polymeren Matrixwerkstoffes mit einem Abreißgewebe versehen, welches nach dem Aushärten des polymeren Matrixwerkstoffes vom Verbundbauteil abgerissen wird, um eine erhöhte Rauheit auf der Oberfläche des Verbundbauteils zu erzeugen. In dem entsprechend aufgerauten Oberflächenbereich wird dann anschließend mittels eines thermischen Spritzverfahrens eine Beschichtung auf dem Verbundbauteil aufgetragen. Die Verwendung von Abreißgewebe bei der Herstellung von Verbundbauteilen ist hinreichend bekannt und erlaubt das Erzeugen von Oberflächenbereichen, welche besonders zuverlässig beschichtet oder lackiert werden können. Während einem Zwischenlagern des entsprechenden Verbundbauteils schützt das Abreißgewebe zudem die Oberfläche des Verbundbauteils vor einer Verschmutzung oder Beschädigung. Ferner offenbart die EP 2 489 499 A1 ein Faserverbund-Bauteil, welches zur Erzeugung einer optisch ansprechenden Oberfläche mit einer Folie verklebt wird. Hierzu wird das Faserverbund-Bauteil in eine Hälfte eines Spritzgießwerkezugs eingelegt und die entsprechende, gegebenenfalls strukturierte, Folie in die andere Hälfte des Spritzgießwerkzeugs so eingelegt, dass bei geschlossenem Spritzgießwerkezug zwischen der Folie und einem Wandbereich des Faserverbund-Bauteils ein Zwischenraum ausgebildet wird, welcher durch einen Klebstoff zum Verbinden der Folie und des Faserverbund-Bauteils eingefüllt wird. Auch hier verbleibt die Folie am Gegenstand.

CN 114 867 58 A offenbart ein Verfahren mit dem im Oberbegriff von Anspruch 1 zusammengefassten Merkmalen. Es wird zudem verwiesen auf US 10 118 315 B1.

Der vorliegenden Erfindung liegt die Aufgabe zugrunde, ein verbessertes Verfahren zum Übertragen von Mustern auf Körper anzugeben, welches das Übertragen von Mustern auf Körper mit einem im Vergleich geringen Arbeitsaufwand erlaubt, dabei kostengünstig ist und einfach in der Anwendung.

Erfindungsgemäß wird diese Aufgabe durch ein Verfahren zum Übertragen wenigstens eines Musters auf einen Körper mit den Merkmalen des Anspruchs 1 gelöst.

Bei einem Verfahren zum Übertragen wenigstens eines Musters auf einen Körper, vorliegend auch als Strukturkörper bezeichnet, wird die Oberfläche des Körpers zum Übertragen des Musters zumindest partiell strukturiert, wobei erfindungsgemäß die folgenden Verfahrensschritte ausgeführt werden:
- Bereitstellen eines Konturkörpers oder Konturmaterials, wobei Beides eine dem zu erzeugenden Muster als Negativ entsprechende Kontur aufweist;
- Aufbringen auf zumindest einen Abschnitts des Konturkörpers oder Konturmaterials einer fließfähigen und aushärtbaren Substanz;
- Aushärten der Substanz zur Erzeugung des Strukturkörpers; und
- Trennen von Strukturkörper und konturgebendem Material (Konturmaterial).

Bei der Substanz handelt es sich um einen Reinstoff oder ein Stoffgemisch. Zur Herstellung des Körpers und zum Übertragen des Musters auf die Oberfläche des Körpers reicht es bereits aus, den Konturkörper oder das Konturmaterial mit der fließfähigen, also sich in einem flüssigen, pastösen oder breiartigen Zustand befindenden Substanz zu benetzen und nach dem Aushärtevorgang beides wieder zu trennen.

Der Vorgang kann iterativ wiederholt werden, um einen Schichtaufbau zu realisieren. So wird eine weitere Schicht der Substanz auf dem erzeugten Körper aufgebracht.

Das erfindungsgemäße Verfahren sieht dabei das Durchführen folgender ergänzender Verfahrensschritte vor:
- Bereitstellen einer Gießform;
- Einbringen des Konturkörpers oder Konturmaterials in die Gießform;
- Befüllen der Gießform mit der fließfähigen und aushärtbaren Substanz, bevor und/oder nachdem der Konturkörper oder das Konturmaterial in die Gießform eingebracht wird/wurde;
- Entnahme zumindest des Strukturkörpers aus der Gießform.

Das erfindungsgemäße Verfahren sieht also vor, das auf dem Körper zu erzeugende Muster mittels des Konturkörpers oder des Konturmaterials in einem Arbeitsgang bei der Herstellung des Körpers während des Aushärtevorgangs zu erzeugen. Indem das Muster während der Erzeugung des Körpers auf diesen übertragen wird, entfallen zusätzliche Oberflächenbearbeitungsschritte nach der Herstellung des Körpers, was einen Arbeitsaufwand und damit auch Kosten zur Herstellung des mit dem Muster versehenen Körpers reduziert. Die Konturkörper oder das Konturmaterial übertragen dabei in die durch den Aushärtevorgang entstehende Oberfläche des Körpers eine Art "Struktur".

Durch das Verwenden einer Gießform lässt sich der Strukturkörper dabei in einer gewünschten Gestalt erzeugen.

Als konturgebender Körper oder Material werden Folienverschiedener Dicken und Härten eingesetzt, und die konturgebenden Körper oder Materialien können z.B. Folien aus verschiedenen Materialien sein oder aus Folien mit zusätzlichen silikonähnlichen Stoffen bestehen.

Die Eigenschaften dieser Konturmaterialien müssen jegliche Schrumpfungs-Parameter der Gießsubstanz korrelierend überbrücken, da es sonst zum Eintrag von Spannungen in die Gießsubstanz und letztlich zum Bruch des Strukturkörpers führen kann.Ebenso sollten sie vergleichsweise reaktionsträge, beständig gegenüber Basen, Alkoholen sowie unpolaren Lösungsmitteln sein wie auch einen geringen Reibungskoeffizienten aufweisen. Durch solch geringe Reibungskoeffizienten wird das Anhaften der in der Gießform aushärtenden Substanz an die Konturkörper oder Materialien sowie an der Gießform selbst zuverlässig verhindert.

Zum Konturieren der konturgebenden Körper oder Materialien, können verschiedene Methoden eingesetzt werden. Diese können einer geeigneten chemischen, thermischen und/oder mechanischen Behandlung unterzogen worden sein. Beispielsweise können diese Körper oder Materialiengeätzt, graviert, gestanzt, gepresst, geprägt, tiefgezogen, zerknäult oder desgleichen werden.

Gemäß einer weiteren vorteilhaften Ausgestaltung des Verfahrens härtet die Substanz aus durch:
- eine Temperaturerhöhung;
- eine Temperaturabsenkung;
- eine chemische Reaktion; und/oder
- Trocknen.

Somit sind verschiedene Mechanismen zum Überführen der noch fließfähigen Substanz in den festen Zustand möglich. Dies erlaubt die Nutzung verschiedenster Reinstoffe bzw. Stoffgemische zur Herstellung des Strukturkörpers.

Das erfindungsgemäße Verfahren sieht vor, dass die Konturkörper oder Materialien vor dem Einfüllen der Substanz in der Gießform fixiert werden. Hierdurch wird das Verrutschen in der Gießform während dem Einfüllvorgang der Substanz verhindert. Hierdurch lässt sich das zu erzeugende Muster besonders zuverlässig auf dem durch das Aushärten erzeugten Körper übertragen, sodass das entsprechende Muster nach dem Entformen des Körpers aus der Gießform auch in dem Oberflächenbereich des Körpers vorliegt, für den es vorgesehen ist. Zum Fixieren in der Gießform können verschiedene Methoden eingesetzt werden, beispielsweise ein Befestigen der Konturkörper oder Materialien in der Gießform mittels formschlüssiger, kraftschlüssiger und/oder stoffschlüssiger Befestigungsmittel wie Haken, Schrauben, Ösen und Schnüren, Klebstoff, Klettband und dergleichen.

Entsprechend einer weiteren vorteilhaften Ausgestaltung des Verfahrens härtet die Substanz durch einen Polymerisationsvorgang aus und bildet dabei einen thermoplastischen Kunststoff, insbesondere Polymethylmethacrylat (PMMA) aus. Kunststoffe und Harze erlauben das Erzeugen von Körpern unterschiedlichster physikalischer Eigenschaften. Als thermoplastischer Kunststoff wird dabei bevorzugt **PMMA** verwendet. Der Substanz, sprich den zur Herstellung von **PMMA** verwendeten Ausgangsstoffen, können verschiedene Zuschlagmittel wie anorganische und/oder organische Farbpigmente, Aktivatoren oder dergleichen zugesetzt werden, um die physikalischen Eigenschaften des zu erzeugenden Strukturkörpers gezielt an Kundenwünsche einzustellen.

Eine weitere vorteilhafte Ausgestaltung des erfindungsgemäßen Verfahrens sieht ferner vor, dass die Substanz beim Aushärten erwärmt wird. Dabei kann die Substanz zum einen extern aktiv erhitzt werden, beispielsweise durch in die Gießform eingebrachte Heizelemente. Die Substanz kann jedoch beim Aushärten auch aus sich selbst heraus erwärmt werden, beispielsweise aufgrund eines exotherm ablaufenden Polymerisationsvorgangs. Zusätzlich oder alternativ kann während dem Aushärtevorgang auch ein gegenüber der Umgebung erhöhter Druck auf die sich in der Gießform befindliche Substanz ausgeübt werden oder der Gießvorgang unter Aufbringen eines (partiellen) Vakuums erfolgen.

Entsprechend einer weiteren vorteilhaften Ausgestaltung des Verfahrens wird eine gegenüber der Umgebung abgeschlossene Gießform verwendet, welche zum Einlegen der Konturkörper oder Materialien und zur Entnahme zumindest des Strukturkörpers geöffnet wird. Durch das Verwenden einer gegenüber der Umgebung abgeschlossenen Gießform wird der Eintrag von Schmutzpartikeln und Fremdkörpern während des Aushärtevorgangs zuverlässig verhindert. Der Körper weist entsprechend wenig bis keine Fehlstellen auf, wodurch seine physikalischen Eigenschaften, insbesondere seine mechanische Festigkeit, gesteigert wird. Zudem lässt sich der Körper durch das Verwenden einer abgeschlossenen Gießform in eine nahezu jede beliebig wählbare dreidimensionale Form bringen.

Bevorzugt wird dem Strukturkörper beim Aushärten durch die Konturkörper oder Materialien ein solches Muster übertragen, dass die Differenzen zwischen dem sich vom Körper wegerstreckenden Erhebungen und den sich in den Strukturkörper hineinerstreckenden Tälern des strukturierten Oberflächenbereichs kleiner als 100 mm, bevorzugt kleiner als 10 mm, besonders bevorzugt kleiner als 1 mm und insbesondere kleiner als 0,1 mm sind. Mit Hilfe des erfindungsgemäßen Verfahrens ist es somit möglich, unterschiedlichste Muster auf einen entsprechenden Körper zu übertragen. Das Muster kann eine beliebige Ausdehnung auf der Oberfläche des während des Gießvorgangs zu erzeugenden Strukturkörper aufweisen. Es kann die gesamte Oberfläche des Körpers mit dem Muster versehen werden oder auch nur Teile davon. Die Differenz zwischen den Erhebungen und den Tälern des Musters kann dabei bevorzugterweise in einer Größenordnung zwischen 100 mm bis 0,1 mm liegen. Die Oberfläche des Körpers kann also entsprechend mit Wellen, Dellen, Rissen, Riefen und dergleichen versehen werden. Auch können die mit dem Muster versehenen Oberflächenbereiche durch das Vorsehen einer besonders geringen Differenz zwischen den Erhebungen und Tälern aufgeraut werden. Dem Gestaltungsspielraum zum Übertragen der Muster auf den Körper sind somit nahezu keine Grenzen gesetzt.

Bei einer Gießanordnung kann die Gießform einteilig oder auch mehrteilig ausgeführt sein und offen gegenüber der Umgebung oder abgeschlossen gegenüber der Umgebung sein. Die Gießform bildet das Formnest.

Weitere vorteilhafte Ausgestaltungen des erfindungsgemäßen Verfahrens zum Übertragen von Mustern auf Körpern, ergeben sich aus den Beispielen, welche nachfolgend unter Bezugnahme auf die Figuren näher beschrieben werden.

Dabei zeigen:
- Figur 1: eine schematisierte Schnittansicht durch eine erfindungsgemäße Gießanordnung zur Herstellung eines mit einem Muster versehenen erfindungsgemäßen Körpers;
- Figur 2: eine schematisierte Schnittansicht durch den mit dem Muster versehenen Oberflächenbereich des Körpers in einer vergrößerten Darstellung;
- Figur 3: ein erstes Ausführungsbeispiel eines erfindungsgemäßen Körpers; und
- Figur 4: ein zweites Ausführungsbeispiel eines erfindungsgemäßen Körpers.

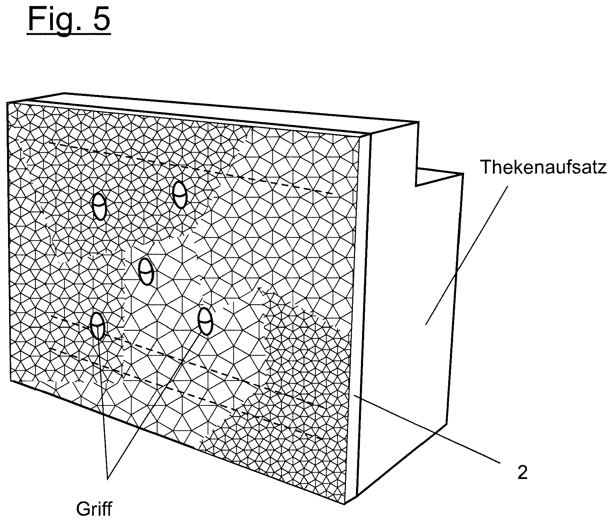

- Figur 5: ist ein Thekenaufsatz, der ein Modell eines dritten Ausführungsbeispiels zeigt, nämlich einen erfindungsgemäßen Konturkörper, der eine Kletterwand mit Griffen wiedergibt, und der als Thekenbeleuchtung dient.

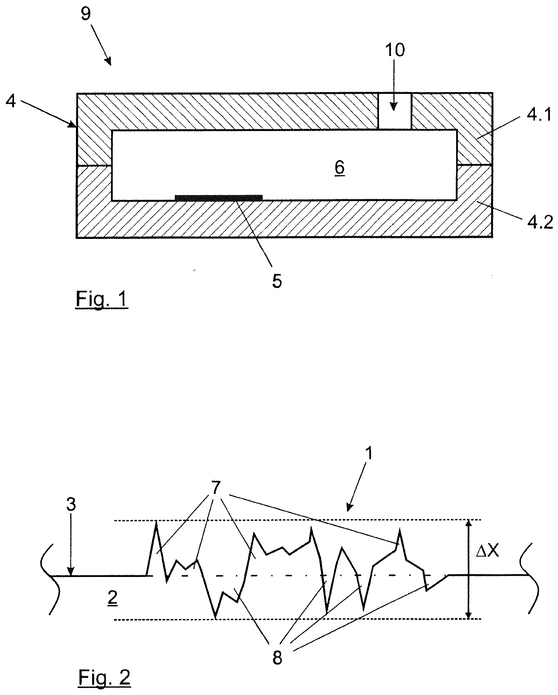

Figur 1 zeigt eine Schnittansicht durch eine erfindungsgemäße Gießanordnung 9, umfassend eine in ein oberes Formnest 4.1 und ein unteres Formnest 4.2 unterteilte Gießform 4 sowie einen in die Gießform 4 eingebrachten Konturkörper oder Material 5. Die Gießform 4 weist eine Öffnung 10 zum Befüllen mit einer fließfähigen und aushärtbaren Substanz 6 auf. Die Gießform 4 kann offen gegenüber der Umgebung oder, wie in Figur 1 dargestellt, abgeschlossen gegenüber der Umgebung ausgeführt sein. Bei der Substanz 6 handelt es sich bevorzugt um ein Gemisch aus den Ausgangsstoffen zur Herstellung von PMMA. Es können aber auch andere Gießharze verwendet werden.

Die Substanz 6 härtet in der Gießform 4 aus, wodurch ein in den folgenden Figuren gezeigter fester Körper 2 entsteht.

Der Substanz 6 wird während des Aushärtevorgangs in der Gießform 4 mittels des Konturkörpers oder der Materialien 5 ein ebenfalls in den folgenden Figuren dargestelltes Muster 1 übertragen. Dieses Muster 1 kann auch als "Struktur" bezeichnet oder mit einem solchen verglichen werden.

Bei dem Konturkörper oder Konturmaterial 5 handelt es sich aus Folie verschiedener Dicken und Härten. Der Konturkörper oder das Konturmaterial 5 kann aus Folie verschiedener Materialien oder aus Folien mit zusätzlichen silikonähnlichen Stoffen bestehen.

Der Konturkörper oder das Konturmaterial weist dabei eine dem zu erzeugenden Muster 1 als Negativ entsprechende Kontur auf. Hierdurch wird dem Körper 2 die entsprechende "Struktur" übertragen.

Figur 2 zeigt eine vergrößerte Schnittansicht durch das Muster 1. Zu erkennen ist eine maximale Differenz ΔX zwischen den sich vom Körper 2 wegerstreckenden Erhebungen 7 und den sich in den Körper 2 hineinerstreckenden Tälern 8. Diese maximale Differenz ΔX liegt dabei bevorzugt in einer Größenordnung zwischen 100 mm bis 0,1 mm.

Das Muster 1 kann sich dabei über die vollständige Oberfläche 3 des Körpers 2 erstrecken oder auch nur einen Oberflächenbereich des Körpers 2 bedecken. Insbesondere sind unterschiedliche Muster 1 auf verschiedenen Seiten des Körpers 2 aufgebracht.

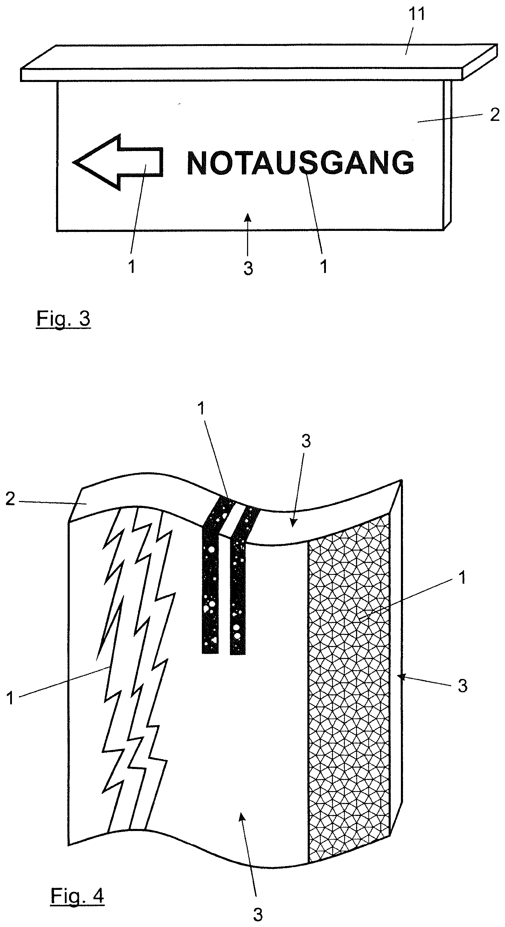

Figur 3 zeigt ein erstes Ausführungsbeispiel des Körpers 2 als Notausgangsschild. Bei dem Muster 1 handelt es sich dabei zum einen um einen nach links weisenden Pfeil sowie um den Schriftzug "Notausgang". In den Körper 2 kann durch eine Befestigungsplatte 11 Licht eingekoppelt werden. Das Licht kann am Muster 1 für eine bessere Lesbarkeit beziehungsweise Erkennbarkeit gestreut werden.

Figur 4 zeigt ein zweites Ausführungsbeispiel des erfindungsgemäßen Körpers 2 als Raumtrenner. Der in Figur 4 gezeigte Körper 2 weist an verschiedenen Seiten unterschiedlich ausgestaltete Muster 1 auf. Dabei können einzelne Oberflächenbereiche des Raumtrenners beispielsweise mit einem Wellenmuster oder einem Sägezahnmuster versehen sein oder aufgeraut sein.

### Bezugszeichenliste

- 1: Muster
- 2: Strukturkörper
- 3: Oberfläche
- 4: Gießform
- 4.1: oberes Formnest
- 4.2: unteres Formnest
- 5: Konturkörper oder Strukturmaterial
- 6: Substanz
- 7: Erhebung
- 8: Tal
- 9: Gießanordnung
- 10: Öffnung
- 11: Befestigungsplatte
- ΔX: maximale Differenz

## Patentansprüche

1. Verfahren zum Übertragen wenigstens eines Musters (1) auf einen Strukturkörper (2), wobei die Oberfläche (3) des Strukturkörpers (2) zum Übertragen des Musters (1) zumindest partiell strukturiert wird,
mit den folgenden Verfahrensschritten:
- Bereitstellen eines Konturkörpers oder Konturmaterials (5), der/das eine dem zu erzeugenden Muster (1) entsprechende Kontur oder Struktur aufweist;
- Aufbringen einer fließfähigen und aushärtbaren Substanz (6) auf wenigstens einen Abschnitt des Konturkörpers oder Konturmaterials (5);
- Aushärten der Substanz (6) zur Erzeugung des Strukturkörpers (2); und
- Trennen von Strukturkörper (2) und Konturkörper oder Konturmaterial (5)
- Herstellen einer Gießform (4);
- Einbringen des Konturkörpers oder Konturmaterials (5) in die Gießform (4);
- Befüllen der Gießform (4) mit der fließfähigen und aushärtbaren Substanz (6), bevor und/oder nachdem der Konturkörper oder das Konturmaterial (5) in die Gießform (4) eingebracht wird/wurde;
- Entnahme zumindest des Strukturkörpers (2) aus der Gießform (4);
**dadurch gekennzeichnet, dass**
der Konturkörper oder das Konturmaterial (5) vor dem Einfüllen der Substanz (6) in der Gießform (4) fixiert wird, und
als Konturkörper oder Konturmaterial (5) Folien unterschiedlicher Dicken und Härten eingesetzt werden.

2. Verfahren nach Anspruch 1,
**dadurch gekennzeichnet, dass**
die Substanz (6) aushärtet durch:
- eine Temperaturerhöhung;
- eine Temperaturabsenkung;
- eine chemische Reaktion; und/oder
- Trocknen.

3. Verfahren nach einem der Ansprüche 1 oder 2,
**dadurch gekennzeichnet, dass**
die Substanz (6) durch einen Polymerisationsvorgang aushärtet und dabei einen thermoplastischen Kunststoff ausbildet, wie z.B. PMMA.

4. Verfahren nach einem der Ansprüche 1 bis 3,
**dadurch gekennzeichnet, dass**
eine gegenüber der Umgebung abgeschlossene Gießform (4) verwendet wird, welche zum Einlegen des Konturkörpers oder Konturmaterials (5) und zur Entnahme zumindest des Strukturkörpers (2) geöffnet wird.

5. Verfahren nach einem der Ansprüche 1 bis 4,
**dadurch gekennzeichnet, dass**
dem Strukturkörper (2) beim Aushärten durch den Konturkörper oder dem Konturmaterial (5) ein solches Muster übertragen wird, dass die Differenzen zwischen sich vom Strukturkörper (2) wegerstreckenden Erhebungen (7) und sich in den Strukturkörper (2) hineinerstreckenden Tälern (8) des strukturierten Oberflächenbereichs kleiner als 100 mm, bevorzugt kleiner als 10 mm, besonders bevorzugt kleiner als 1 mm und insbesondere kleiner als 0,1 mm ist.

## Claims

1. Method for transferring at least one pattern (1) onto a structured body (2),
wherein the surface (3) of the structured body (2) is at least partially structured to transfer the pattern (1), comprising the following method steps:
- providing a contour body or contour material (5), which has a contour or structure corresponding to the pattern (1) to be generated;
- applying a free-flowing and curable substance (6) to at least one section of the contour body or contour material (5);
- curing the substance (6) to create the structured body (2); and
- separating structured body (2) and contour body or contour material (5);
- producing a casting mold (4);
- introducing the contour body or contour material (5) into the casting mold (4);
- filling the casting mold (4) with the free-flowing incurable substance (6), before and/or after the contour body for the contour material (5) is/was introduced into the casting mold (4);
- removing at least the structured body (2) from the casting mold (4);
**characterized in that**
the contour body or the contour material (5) is fixed in the casting mold (4) before the filling of the substance (6), and
films of different thicknesses and hardnesses are used as the contour body or contour material (5).

2. Method as claimed in claim 1,
**characterized in that**
the substance (6) cures due to:
- a temperature increase;
- a temperature decrease;
- a chemical reaction; and/or
- drying.

3. Method as claimed in either one of claims 1 or 2,
**characterized in that**
the substance (6) cures due to a polymerization procedure and forms a thermoplastic, such as PMMA.

4. Method as claimed in any one of claims 1 to 3,
**characterized in that**
a casting mold (4) enclosed off from the surroundings is used, which is opened to insert the contour body or contour material (5) and to remove at least the structured body (2).

5. Method as claimed in any one of claims 1 to 4,
**characterized in that**
a pattern is transferred to the structured body (2) during the curing by the contour body or the contour material (5) such that the differences between protrusions (7) extending away from the structured body (2) and valleys (8) of the structured surface area extending into the structured body (2) are less than 100 mm, preferably less than 10 mm, particularly preferably less than 1 mm, and in particular less than 0.1 mm.

## Revendications

1. Procédé pour le transfert d'au moins un motif (1) sur un corps de structure (2), dans lequel la surface (3) du corps de structure (2) est au moins en partie structurée en vue du transfert du motif (1), comprenant les étapes de procédé suivantes :
- préparation d'un corps de contour ou d'un matériau de contour (5) qui comporte un contour ou une structure correspondant au motif (1) à créer ;
- application d'une substance fluide et durcissable (6) sur au moins une partie du corps de contour ou du matériau de contour (5) ;
- durcissement de la substance (6) pour produire le corps de structure (2) et
- séparation du corps de structure (2) et du corps de contour ou matériau de contour (5)
- fabrication d'un moule de coulée (4) ;
- introduction du corps de contour ou du matériau de contour (5) dans le moule de coulée (4) ;
- remplissage du moule de coulée (4) avec la substance fluide et durcissable (6) avant et/ou après l'introduction du corps de contour ou du matériau de contour (5) dans le moule de coulée (4) ;
- retrait du corps de structure (2), au moins, du moule de coulée (4) ;
**caractérisé en ce que** le corps de contour ou le matériau de contour (5) est fixé avant le remplissage du moule de coulée (4) avec la substance (6) et
des films d'épaisseurs et de duretés différentes sont utilisées comme corps de contour ou matériau de contour (5).

2. Procédé selon la revendication 1, **caractérisé en ce que** la substance (6) durcit par :
- une élévation de la température ;
- un abaissement de la température ;
- une réaction chimique et/ou
- séchage.

3. Procédé selon l'une des revendications 1 ou 2, **caractérisé en ce que** la substance (6) durcit par un processus de polymérisation et forme ainsi un matériau de synthèse thermoplastique, par exemple du PMMA.

4. Procédé selon l'une des revendications 1 à 3, **caractérisé en ce qu'**on utilise un moule de coulée (4) fermé vis-à-vis de l'environnement, qui est ouvert pour l'introduction du corps de contour ou du matériau de contour (5) et pour le retrait, au moins, du corps de structure (2).

5. Procédé selon l'une des revendications 1 bis 4, **caractérisé en ce que**, lors du durcissement, le corps de contour ou le matériau de contour (5) transfère sur le corps de structure (2) un motif tel que les différences entre les saillies (7) de la zone de surface structurée, qui s'étendent à l'opposé du corps de structure (2), et ses creux (8), qui s'étendent vers l'intérieur du corps de structure (2), est inférieure à 100 mm, de préférence inférieure à 10 mm, en particulier inférieure à 1 mm et tout particulièrement inférieure à 0,1 mm.
